# EUROPÄISCHE PATENTSCHRIFT

(11) **EP 2 543 526 B1**
(45) Veröffentlichungstag und Bekanntmachung des Hinweises auf die Patenterteilung: **03.02.2016**
(21) Anmeldenummer: 12002084.7
(22) Anmeldetag: 23.03.2012
(51) Int. Cl.: B60D 1/60

(54) **Abdeckung für ein an einer Aufbaustruktur an der Front- oder Heckseite eines Kraftfahrzeuges vorstehendes Funktionsteil**
Cover for a device extending from an extension on the front or rear side of a motor vehicle
Revêtement pour un module fonctionnel placé sur une structure de montage à l'avant ou à l'arrière d'un véhicule automobile

(30) Priorität: 05.07.2011 DE 102011106977
(43) Veröffentlichungstag der Anmeldung: 09.01.2013
(73) Patentinhaber: MAN Truck & Bus AG, 80995 München (DE)
(72) Erfinder: Weissbrodt, Olaf, 80992 München (DE)

(56) Entgegenhaltungen:
- DE-A1- 2 936 789
- DE-A1-102006 006 395
- DE-A1-102007 002 798
- GB-A- 1 023 855
- US-A- 5 934 699

## Beschreibung

Die vorliegende Erfindung betrifft eine Abdeckung für ein an einer Aufbaustruktur an der Front- oder Heckseite eines Kraftfahrzeuges vorstehendes Funktionsteil gemäß dem Oberbegriff des Patentanspruchs 1.

Durch die gattungsgemäße DE 10 2007 011 265 A1 ist eine Abdeckung an einem schwenkbar angelenkten Schäkel für ein Nutzfahrzeug bekannt, die sich aus zwei etwa becherförmigen Kappen aus Kunststoff zusammensetzt, die auf einen Schäkelbolzen beidseitig aufgesteckt sind. Vorteilhaft dabei ist es, dass der Schäkel zum Beispiel für eine Abschleppaktion unbehindert zugänglich ist. Das den Schäkelbolzen aufnehmende, rahmenfeste Befestigungsauge ist jedoch nicht abgedeckt und zudem Witterungseinflüssen ausgesetzt. Als Funktionsteile können auch Abschleppkupplungen, Seilwinden, Abschleppösen etc. vorgesehen sein.

Weiter ist aus der DE 10 2006 006 395 A1 eine Abdeckung für Anhängerkupplungen bekannt, bei der eine obere Hälfte der Abdeckung schwenkbar an einer unteren Hälfte angelenkt ist und für den Zugang zur Kugel einer Kupplungsstange aufgeschwenkt werden kann. Ein vom Prinzip her ähnlicher Aufbau in Verbindung mit einer Einschuböffnung für eine Anhängerkupplung ist weiter aus der US 5,934,699 A bekannt.

Ferner zeigt die DE 29 36 789 A1 eine in einem Stoßfänger eines Kraftfahrzeugs eingelassene schwenkbare Klappe, über die eine Abschleppöse zugänglich ist.

Eine aus zwei Hälften bestehende Abdeckung für eine Anhängerkupplung, bei der eine obere Hälfte zur Freigabe der Kugel abschwenkbar ist, ist weiter auch aus der GB 1 023 855 A bekannt.

Die DE 10 2007 002 798 A1 zeigt eine Anhängevorrichtung bei der eine Aufnahme für eine Anhängekupplung über eine abschwenkbare stoßfängerseitige Klappe zugänglich ist.

Aufgabe der Erfindung ist es, eine Abdeckung für vorstehende Funktionsteile vorzuschlagen, die bei geringem Mehraufwand und einfacher Montage einen verbesserten Schutz bei guter Zugänglichkeit des Funktionsteils herstellt.

Die Lösung dieser Aufgabe gelingt mit den Merkmalen des Patentanspruchs 1. Vorteilhafte und besonders zweckmäßige Weiterbildungen der Erfindung sind Gegenstand der Unteransprüche.

Gemäß Anspruch 1 wird eine Abdeckung für ein an einer Aufbaustruktur an der Front- oder Heckseite eines Kraftfahrzeugs vorstehendes Funktionsteil vorgeschlagen, wobei die Abdeckung gehäuseförmig das Funktionsteil umschließt, an der Aufbaustruktur befestigt ist und eine aufstellbare Klappe aufweist, über die das Funktionsteil bei Bedarf zugänglich ist. Damit ist auf baulich einfache Weise ein umfassender Schutz des Funktionsteils geschaffen, der zudem Verletzungen von Personen durch Anstoßen, Kollisionen, etc. weitgehend ausschließt und trotzdem das Handling des Funktionsteils in Einsatzfällen nicht beeinträchtigt. Erfindungsgemäß ist nunmehr vorgesehen, dass das Funktionsteil einen schwenkbar angelenkten Schäkel aufweist und die Abdeckung an deren Unterseite offen ausgeführt ist, wobei die Öffnung an die Klappe angrenzt. Damit ist bei verringertem Herstellungsaufwand quasi eine von vorne und oben nicht sichtbare Angriffsleiste geschaffen, über die die Klappe bedienbar ist. Der Schäkel ist bevorzugt ein über einen Bolzen an einem Befestigungsteil schwenkbar angelenkter Schäkel eines Nutzfahrzeugs.

Insbesondere kann die Klappe in Hochachsenrichtung nach oben (gegebenenfalls aber auch zur Seite) aufstellbar mit einer etwa horizontalen Schwenkachse ausgeführt sein. Bei einer Ausführung der Klappe aus Kunststoff (es sind auch andere, bevorzugt elastisch nachgiebige Materialen einsetzbar) kann diese fertigungstechnisch besonders einfach mit einem Filmscharnier als Schwenkachse und direkt durch Schlitze in der Außenwand gebildet sein. Selbstverständlich kann die Schwenkachse durch jedes geeignete Scharnierelement gebildet werden, das das Schwenken der aufstellbaren Klappe für den jeweiligen Einsatzfall auf einfache und funktionssichere Weise ermöglicht.

Zur Erzielung relativ kleiner Abmaße kann die Abdeckung das Schäkel über nur etwa dessen halbe Länge überdecken, während die restliche Länge des Schäkels durch die untere Öffnung hindurch aus der Abdeckung vorragt. Das im regulären Betrieb eng an der Aufbaustruktur (zum Beispiel an einem Stoßfängermodul) anliegende Schäkelende stellt keine Verletzungsgefahr dar und ist bei dessen Einsatz einfach greifbar und durch gleichzeitiges Aufschwenken der Klappe in Betriebsstellung bringbar.

Die Abdeckung kann bevorzugt an ihrer Rückwand mittelbar oder unmittelbar mit der Aufbaustruktur verbunden sein, so dass von außen her keinerlei Befestigungsmittel sichtbar sind. Die feste Verbindung ist bevorzugt als lösbare und/oder kraft- und/oder formschlüssige Verbindung ausgeführt, die einfach und funktionssicher herzustellen sowie gegebenenfalls auch wieder zu lösen ist. Besonders montagegünstig kann dazu an der Aufbaustruktur eine Halteplatte befestigt sein, an der die Rückwand durch eine oder mehrere Steckverbindungen befestigt ist. Alternativ kann die Befestigung auch über wenigstens eine Clipsverbindung hergestellt sein.

Eine besonders zweckmäßige Befestigungsvariante für die Abdeckung an zum Beispiel einem Schäkel als Funktionsteil besteht darin, dass die Halteplatte an einem bevorzugt ringförmigen und/oder plattenförmigen Trägerelement, zum Beispiel einem Trägerblech, durch eine form- und/oder kraftschlüssige und/oder lösbare Verbindung, insbesondere durch eine Steckverbindung oder eine Schraubverbindung befestigt ist, wobei das Trägerelement unmittelbar zwischen einem ein Befestigungsauge tragenden Ankerbolzen einer Funktionsteilaufnahme, zum Beispiel einer Schäkelaufnahme, und der Aufbaustruktur gehalten ist. Das bevorzugt ring- und/oder plattenförmige Trägerelement wird somit bei der Montage der Funktionsteilaufnahme mit beigelegt, zum Beispiel aufgeschoben und ohne Mehraufwand befestigt. Die Abdeckung kann dann mit der vormontiertem Halteplatte auf das Trägerelement aufgeschoben oder mit diesem zum Beispiel verschraubt oder anderweitig verbunden sein.

Dazu kann in baulich einfacher Weise das Trägerelement mehrere, zum Beispiel zwei vertikal und parallel zueinander verlaufende Führungsnuten aufweisen, in die korrespondierende Zapfen der Halteplatte in Hochachsenrichtung von oben nach unten bis zu einem horizontal ausgerichteten Anschlag einschiebbar sind. Alternativ können in kinematischer Umkehrung in die Rückwand der Abdeckung vertikal und parallel zueinander verlaufende Taschen eingeformt sein, über die die Abdeckung auf an die Halteplatte angeformte, in Hochachsenrichtung nach oben abragende Stege aufsteckbar ist.

Mehrere Ausführungsbeispiele der Erfindung sind im Folgenden anhand der schematischen Zeichnung näher erläutert. Es zeigen:
- Fig. 1: ein mit einem Schäkel ausgeführtes Funktionsteil an einer Vorbaustruktur eines Nutzfahrzeuges mit einer Abdeckung und einer schwenkbaren Klappe in einem vertikalen Längsschnitt;
- Fig. 2: das Funktionsteil gemäß Fig. 1 in einer Draufsicht;
- Fig. 3: in Einzeldarstellung die Abdeckung mit Halteplatte und Trägerblech, die über Steckverbindungen miteinander verbindbar sind;
- Fig. 4: eine alternative Ausführung der Abdeckung mit Halteplatte und Trägerblech, die über eine Schraubverbindung miteinander verbunden sind;
- Fig. 5: die Abdeckung mit anderen vorderer Außenseite schwenkbar angeordneter Klappe in einer raumbildlichen Ansicht von seitlich vorne;
- Fig. 6: die Abdeckung gemäß Fig. 5 in einer Ansicht auf die Rückwand mit angeformten Befestigungsclipsen;
- Fig. 7: die Abdeckung nach Fig. 6 mit angeclipster Halteplatte, die unmittelbar über den Ankerbolzen der Schäkelaufnahme an der Vorbaustruktur befestigt ist; und
- Fig. 8: die Abdeckung nach Fig. 4, jedoch mit einer Clipsverbindung zur Halteplatte und der Schraubverbindung zum Trägerblech.

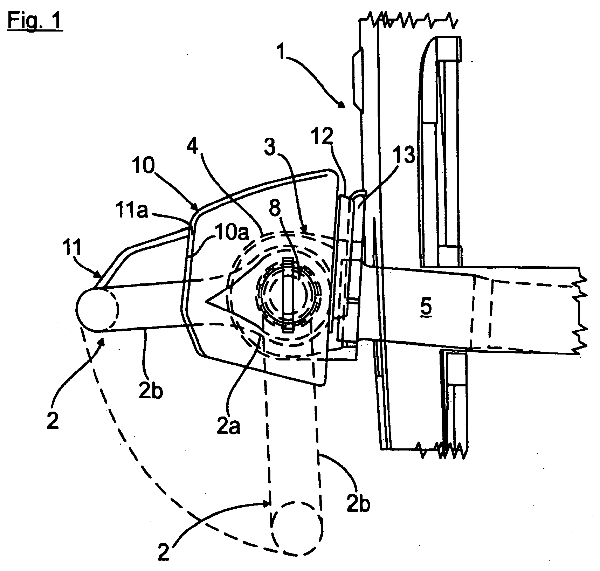

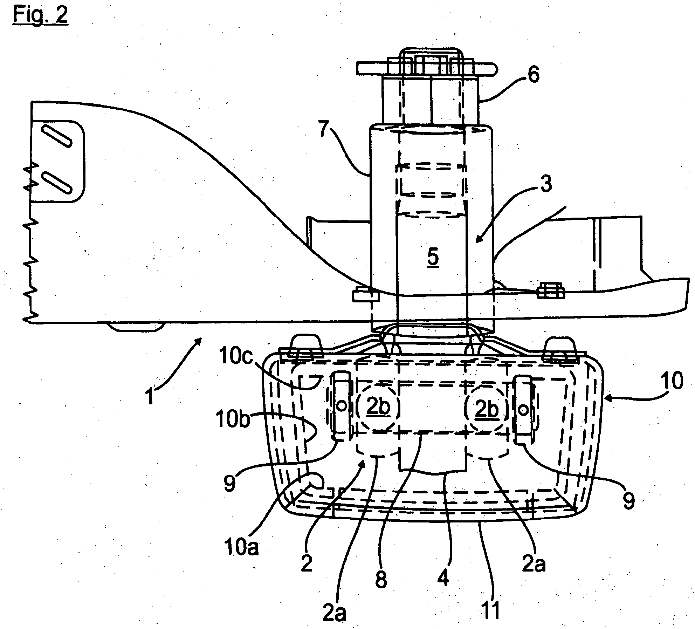

In den Fig. 1 und 2 ist nur abschnittsweise im Bereich eines Stoßfängermoduls 1 einer vorderen Aufbaustruktur eines Nutzfahrzeuges ein schwenkbares Schäkel 2 als Funktionsteil angeordnet, das an einer fahrzeugfesten Schäkelaufnahme 3 angelenkt ist. Die Fig. 1 zeigt die Schäkelaufnahme 3 in einer Vormontagestufe, die Fig. 2 im befestigten Zustand.

Die Schäkelaufnahme 3 setzt sich aus einem die Aufbaustruktur bzw. das Stoßfängermodul 1 nach vorne (oder nach hinten bei einer Heckanordnung) überragenden Befestigungsauge 4 und einem Ankerbolzen 5 zusammen, wobei der Ankerbolzen 5 über eine Schraubverbindung 6 in einer aufbaufesten Tragbüchse 7 befestigt ist.

In dem Befestigungsauge 4 ist über einen Schäkelbolzen 8 das Schäkel 2 schwenkbar gelagert; dabei ist der Schäkelbolzen 8 in entsprechende Bohrungen im Befestigungsauge 4 und in zwei an das Schäkel 2 angeformte Ösen 2a eingesetzt und über seitliche Sicherungselemente 9 axial gesichert.

An die Ösen 2a des Schäkels 2 schließen in üblicher Weise zwei endseitig miteinander verbundene, etwa ein Langloch einschließende Schenkel 2b an. Die Fig. 1 zeigt das Schäkel 2 in ausgeschwenkter Gebrauchslage und in gestrichelten Linien in der ungenützten Position, in der es nach unten ragend und mehr oder minder parallel zur Außenkontür des Stoßfängermoduls 1 verläuft.

Das nach vorne überragende Funktionsteil gebildet aus dem Schäkel 2 und der Schäkelaufnahme 3 ist mittels einer gehäuseförmigen Abdeckung 10 aus elastischem Kunststoff umschlossen, die an deren vorderer Außenwand 10a eine aufstellbare Klappe 11 aufweist. Die horizontal und quer zur Fahrzeuglängsrichtung ausgerichtete Schwenkachse der Klappe 11 ist durch ein Filmscharnier bei 11a gebildet.

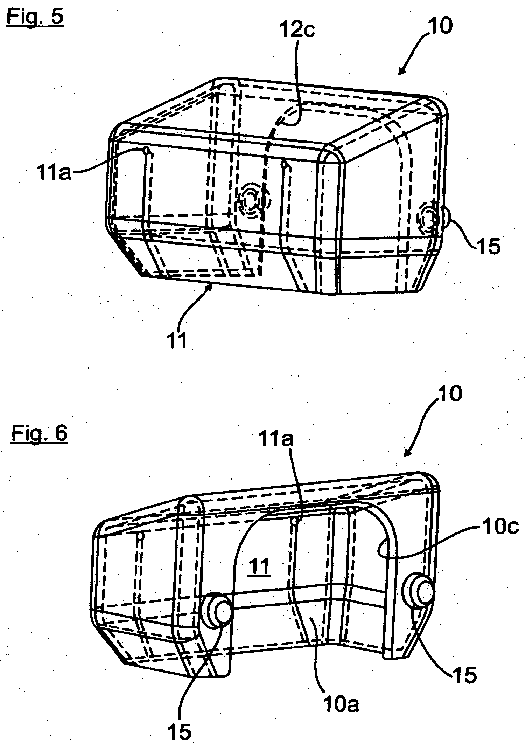

Im Übrigen weist die Abdeckung 10 Seitenwände, obere und untere Wände, etc. auf, die mit Abrundungen, wie insbesondere aus den Fig. 5 und 6 ersichtlich ist, ineinander übergehen.

Ferner ist die Abdeckung 10 an ihrer Unterseite mit einer Öffnung 10b (vergleiche Fig. 1) versehen, durch die hindurch das Schäkel 2 bzw. dessen Schenkel 2b über etwa deren halbe Längs nach unten hindurchragt. Die Abdeckung 10 umschließt deshalb nur die Schäkelaufnahme 3 mit dem Befestigungsauge 4 und der oberen Hälfte des Schäkels 2, während dessen untere Hälfte frei nach unten vorsteht.

Die untere Öffnung 10b der Abdeckung 10 grenzt nach vorne unmittelbar an die oben angelenkte Klappe 11 an. Dadurch kann mit dem nach vorne Schwenken des Schäkels 2 bzw. dessen Schenkel 2b zugleich die Klappe 11 aufgestellt werden. Dies Position zeigt die Fig. 1 in ausgezogenen Linien.

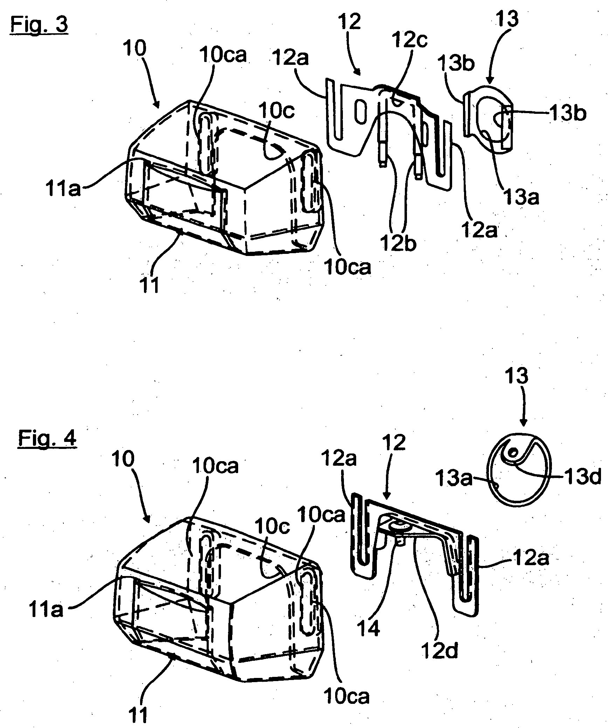

Die Fig. 3 zeigt im Detail eine erste Befestigungsform der Abdeckung 10, die über eine Steckverbindung an einer Halteplatte 12 und diese über eine weitere Steckverbindung an einem hier beispielhaft als Trägerblech 13 bezeichneten Trägerelement befestigt ist. Das Trägerblech 13 weist eine Ausnehmung 13a auf, über die es auf den Ankerbolzen 5 aufsteckbar und mit dessen Befestigung in der Tragbüchse 7 zwischen der Tragbüchse 7 und dem Befestigungsauge 4 (vergleiche Fig. 1) festgeklemmt ist.

Die Steckverbindung zwischen dem Trägerblech 13 und der Halteplatte 12 ist gebildet durch parallel zueinander ausgerichtete Führungsnuten 13b, in die an der Halteplatte 12 angeordnete, korrespondierende Zapfen 12b formschlüssig einschiebbar sind. Ein quer verlaufender Abschnitt 12c der Zapfen 12b bildet einen in vertikaler Richtung nach unten wirkenden Anschlag.

Die Steckverbindung zwischen der Abdeckung 10 und der Halteplatte 12 ist hergestellt mittels an die Halteplatte 12 angeformte, nach oben abragende Stege 12a, auf die die etwa U-förmig ausgeführte, ebenfalls nach unten offene Rückwand 10c der Abdeckung 10 mit eingeformten, die Stege 12a umschließenden Taschen 10ca aufschiebbar ist.

Zur Montage bzw. festen Verbindung der Abdeckung 10 mit der Aufbaustruktur bzw. dem Stoßfängermodul 1 wird nach Montage des Trägerblechs 13 wie vorbeschrieben die Halteplatte 12 mit über die Steckverbindung 12a, 10ca anmontierter Abdeckung 10 von oben nach unten auf das Trägerblech 13 aufgeschoben bzw. über die Steckverbindung 13b, 12b befestigt. Gegebenenfalls kann die Halteplatte 12 unmittelbar in die Rückwand 10c eingespritzt sein (Entfall der Steckverbindung 12a, 10ca) oder es können die Zapfen 12b unmittelbar an die Rückwand 10c angeformt oder an dieser befestigt sein (Entfall der Halteplatte 12).

Die Fig. 4 zeigt eine alternative Befestigungsform der vorbeschriebenen Halteplatte 12 an dem Trägerblech 13, bei der an die Halteplatte 12 und an das Trägerblech 13 an deren oberen Bereich jeweils eine horizontal abragende Lasche 12d, 13d angeformt ist, die im montiertem Zustand aneinander anliegen und mittels einer Schraubverbindung 14 befestigt sind.

Gegebenenfalls können die beiden Verbindungsarten gemäß Fig. 3 und 4 miteinander kombiniert sein, also die Steckverbindung 12b, 13b und die Schraubverbindung 12d, 13d, 14 aufweisen.

Die Fig. 5 und 6 zeigen in raumbildlicher Darstellung die Abdeckung 10 mit einer modifizierten Befestigungsform an der Halteplatte 12, die hier als Clipsverbindung ausgeführt ist.

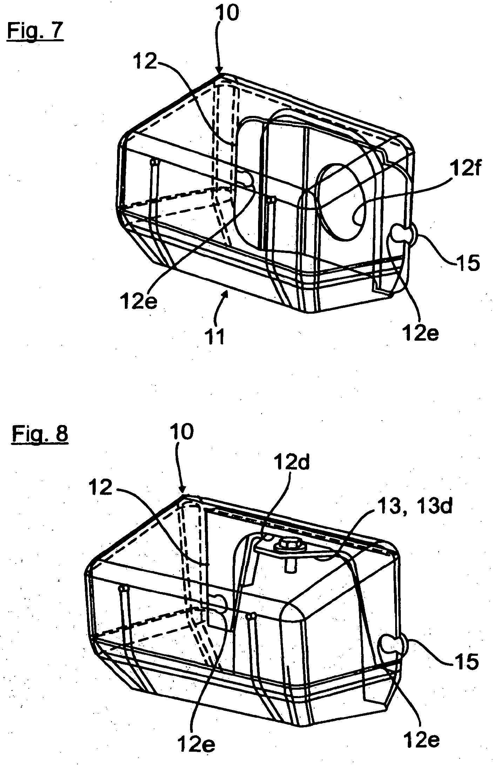

Dazu sind an der Rückwand 10c der Abdeckung 10 zwei stiftförmige Clipse 15 angeformt, die in Bohrungen 12e (vergleiche Fig. 7 und 8) formschlüssig einclipsbar sind.

Zur Montage der Abdeckung 10 ist diese besonders montageeinfach lediglich auf die Halteplatte 12 aufsteckbar.

Die Halteplatte 12 kann gemäß Fig. 8 wiederum über die Schraubverbindung 14 mit dem Trägerblech 13 verbunden sein.

Alternativ kann jedoch die Halteplatte 12 (Fig. 7) eine zentrische Ausnehmung 12f aufweisen und unmittelbar mit der Schäkelaufnahme 3 wie vorstehend zur Befestigung des Trägerblechs 13 ausgeführt fest verbunden sein.

Die vorliegende Erfindung ist nicht auf die beschriebenen Ausführungsbeispiele beschränkt. Insbesondere könnte die Abdeckung 10 über die beschriebenen Steckverbindungen, Clipsverbindungen oder Schraubverbindungen auch unmittelbar an der Außenhaut des Stoßfängermoduls 1 ohne der bevorzugten Verwendung einer Halteplatte 12 und/oder des Trägerblechs 13 befestigt sein.

Die Abdeckung 10 kann gegebenenfalls maßlich so ausgeführt sein, dass sie für verschiedene Ausführungen oder Größen der Funktionsteile als Gleichteil verwendbar ist.

**BEZUGSZEICHENLISTE**

| | | | |
|---|---|---|---|
| 1 | Aufbaustruktur | 13a | Ausnehmung |
| 2 | Schäkel | 13b | Führungsnuten |
| 2a | Ösen | 13d | Lasche |
| 2b | Schenkel | 14 | Schraubverbindung |
| 3 | Schäkelaufnahme | 15 | stiftförmige Clipse |
| 4 | Befestigungsauge | | |
| 5 | Ankerbolzen | | |
| 6 | Schraubverbindung | | |
| 7 | Tragbüchse | | |
| 8 | Schäkelbolzen | | |
| 9 | Sicherungselemente | | |
| 10 | Abdeckung | | |
| 10a | vordere Außenwand | | |
| 10b | untere Öffnung | | |
| 10c | Rückwand | | |
| 10ca | Taschen | | |
| 11 | Klappe | | |
| 11a | Filmscharnier | | |
| 12 | Halteplatte | | |
| 12a | Stege | | |
| 12b | Zapfen | | |
| 12c | Anschlag | | |
| 12d | Lasche | | |
| 12e | Bohrungen | | |
| 12f | Ausnehmung | | |
| 13 | Trägerblech | | |

## Patentansprüche

1. Abdeckung für ein an einer Aufbaustruktur (1) an der Front- oder Heckseite eines Kraftfahrzeuges vorstehendes Funktionsteil, wobei die Abdeckung (10) gehäuseförmig das Funktionsteil (2, 3) umschließt, an der Aufbaustruktur (1) befestigt ist und an der Außenseite (10a) eine aufstellbare Klappe (11) aufweist, über die das Funktionsteil (2, 3) bei Bedarf zugänglich ist, **dadurch gekennzeichnet, dass** das Funktionsteil einen schwenkbar angelenkten Schäkel (2) aufweist und dass die Abdeckung (10) an deren Unterseite offen ausgeführt ist, wobei die Öffnung (10b) an die Klappe (11) angrenzt.

2. Abdeckung nach Anspruch 1, **dadurch gekennzeichnet, dass** die Klappe (11) nach oben aufstellbar mit einer etwa horizontalen Schwenkachse (11a) ausgeführt ist.

3. Abdeckung nach einem der vorhergehenden Ansprüche, **dadurch gekennzeichnet, dass** die Abdeckung (10) aus Kunststoff hergestellt ist und/oder dass die Schwenkachse der Klappe (11) durch ein Scharnierelement, insbesondere durch ein Filmscharnier (11a) gebildet ist.

4. Abdeckung nach einem der vorhergehenden Ansprüche, **dadurch gekennzeichnet, dass** die Abdeckung (10) das Schäkel (2) über nur etwa dessen halbe Länge überdeckt und dass die restliche Länge des Schäkels (2) durch die Öffnung (10b) hindurch aus der Abdeckung (10) vorragt.

5. Abdeckung nach einem der vorhergehenden Ansprüche, **dadurch gekennzeichnet, dass** die Abdeckung (10) an ihrer Rückwand (10c) mittelbar oder unmittelbar mit der Aufbaustruktur (1) verbunden ist, insbesondere lösbar und/oder form- und/oder kraftschlüssig mit der Aufbaustruktur (1) verbunden ist.

6. Abdeckung nach Anspruch 5, **dadurch gekennzeichnet, dass** an der Aufbaustruktur (1) eine Halteplatte (12) befestigt ist, an der die Rückwand (10c) durch wenigstens eine Steckverbindung (12a, 10ca) befestigt ist.

7. Abdeckung nach Anspruch 5 oder 6, **dadurch gekennzeichnet, dass** an der Aufbaustruktur (1) eine Halteplatte (12) befestigt ist, an der die Rückwand (10c) durch wenigstens eine Clipsverbindung (12e, 15) befestigt ist.

8. Abdeckung nach einem der vorhergehenden Ansprüche, **dadurch gekennzeichnet, dass** die Halteplatte (12) an einem Trägerelement (13), insbesondere einem Trägerblech, durch eine form- und/oder kraftschlüssige und/oder lösbare Verbindung, insbesondere durch eine Steckverbindung (13b, 12b) oder eine Schraubverbindung (13d, 12d, 14), befestigt ist, wobei das Trägerelement (13) unmittelbar zwischen einem ein Befestigungsauge (4) tragenden Ankerbolzen (5) einer Funktionsteilaufnahme (3), insbesondere einer Schäkelaufnahme, und der Aufbaustruktur (1, 7) gehalten ist.

9. Abdeckung nach Anspruch 8, **dadurch gekennzeichnet, dass** das Trägerelement (13) mehrere, insbesondere zwei vertikal und parallel zueinander verlaufende Führungsnuten (13b) aufweist, in die korrespondierende Zapfen (12b) der Halteplatte (12) in Hochachsenrichtung gesehen von oben nach unten bis zu einem horizontal ausgerichteten Anschlag (12c) einschiebbar sind.

10. Abdeckung nach einem der vorhergehenden Ansprüche, **dadurch gekennzeichnet, dass** in eine Rückwand (10c) der Abdeckung (10) vertikal und parallel zueinander verlaufende Taschen (10ca) eingeformt sind, über die die Abdeckung (10) auf an die Halteplatte (12) angeformte, in Hochachsenrichtung nach oben abragende Stege (12a) aufsteckbar ist.

## Claims

1. Cover for a functional part projecting from a body structure (1) on the front or rear side of a motor vehicle, wherein the cover (10) surrounds the functional part (2, 3) in the manner of a housing, is fixed on the body structure (1) and, on the outside (10a), has a flap (11) which can be opened and via which the functional part (2, 3) is accessible when required, **characterized in that** the functional part has a pivotally attached shackle (2) and **in that** the cover (10) is embodied in such a way as to be open on the underside thereof, wherein the opening (10b) adjoins the flap (11).

2. Cover according to Claim 1, **characterized in that** the flap (11) is embodied in such a way that it can be opened upwards, having an approximately horizontal pivot axis (11a).

3. Cover according to one of the preceding claims, **characterized in that** the cover (10) is produced from plastic and/or **in that** the pivot axis of the flap (11) is formed by a hinge element, in particular by a film hinge (11a).

4. Cover according to one of the preceding claims, **characterized in that** the cover (10) covers the shackle (2) over only about half the length thereof, and **in that** the remaining length of the shackle (2) projects out of the cover (10) through the opening (10b).

5. Cover according to one of the preceding claims, **characterized in that** the cover (10) is connected directly or indirectly to the body structure (1) at the rear wall (10c) of said cover and, in particular, is connected releasably and/or positively and/or non-positively to the body structure (1).

6. Cover according to Claim 5, **characterized in that** a holding plate (12) is fixed on the body structure (1), and the rear wall (10c) is fixed on said holding plate by means of at least one plug-in joint (12a, 10ca).

7. Cover according to Claim 5 or 6, **characterized in that** a holding plate (12) is fixed on the body structure (1), and the rear wall (10c) is fixed on said holding plate by means of at least one clip joint (12e, 15).

8. Cover according to one of the preceding claims, **characterized in that** the holding plate (12) is fixed on a carrier element (13), in particular a carrier plate, by means of a positive and/or non-positive and/or releasable joint, in particular by means of a plug-in joint (13b, 12b) or a screwed joint (13d, 12d, 14), wherein the carrier element (13) is held directly between an anchor bolt (5) of a functional part receptacle (3), in particular a shackle receptacle, said anchor bolt bearing a fixing lug (4), and the body structure (1, 7).

9. Cover according to Claim 8, **characterized in that** the carrier element (13) has a plurality of guide grooves (13b), in particular two such grooves, extending vertically and parallel to one another, into which corresponding pegs (12b) of the holding plate (12) can be inserted downwards, as seen in the direction of the vertical axis, as far as a horizontally aligned stop (12c).

10. Cover according to one of the preceding claims, **characterized in that** pockets (10ca), which extend vertically and parallel to one another, are formed in a rear wall (10c) of the cover (10), by means of which pockets the cover (10) can be mounted on webs (12a), which are formed on the holding plate (12) and project upwards in the direction of the vertical axis.

## Revendications

1. Revêtement pour une pièce fonctionnelle faisant saillie sur une structure de carrosserie (1) du côté avant ou arrière d'un véhicule automobile, le recouvrement (10) entourant, en forme de boîtier, la pièce fonctionnelle (2, 3), étant fixé à la structure de carrosserie (1) et présentant, au niveau du côté extérieur (10a), un volet redressable (11) par le biais duquel la pièce fonctionnelle (2, 3) est accessible au besoin, **caractérisé en ce que** la pièce fonctionnelle présente un tourillon (2) articulé de manière pivotante et **en ce que** le revêtement (10) est réalisé sous forme ouverte au niveau de son côté inférieur, l'ouverture (10b) étant adjacente au volet (11).

2. Revêtement selon la revendication 1, **caractérisé en ce que** le volet (11) est réalisé de marnière redressable vers le haut avec un axe de pivotement approximativement horizontal (11a).

3. Revêtement selon l'une quelconque des revendications précédentes, **caractérisé en ce que** le revêtement (10) est fabriqué en plastique et/ou en ce que l'axe de pivotement du volet (11) est formé par un élément de charnière, en particulier par une charnière à film (11a).

4. Revêtement selon l'une quelconque des revendications précédentes, **caractérisé en ce que** le revêtement (10) recouvre le tourillon (2) sur seulement approximativement la moitié de sa longueur et **en ce que** la longueur restante du tourillon (2) fait saillie à travers l'ouverture (10b) hors du revêtement (10).

5. Revêtement selon l'une quelconque des revendications précédentes, **caractérisé en ce que** le revêtement (10) est connecté directement ou indirectement à la structure de carrosserie (1) au niveau de sa paroi arrière (10c), en particulier est connecté de manière amovible et/ou par engagement par correspondance de formes et/ou par force à la structure de carrosserie (1).

6. Revêtement selon la revendication 5, **caractérisé en ce qu'**une plaque de retenue (12) est fixée à la structure de carrosserie (1), à laquelle plaque de retenue est fixée la paroi arrière (10c) par au moins une liaison par enfichage (12a, 10ca).

7. Revêtement selon la revendication 5 ou 6, **caractérisé en ce qu'**une plaque de retenue (12) est fixée à la structure de carrosserie (1), à laquelle plaque de retenue est fixée la paroi arrière (10c) par au moins une liaison par enclipsage (12e, 15).

8. Revêtement l'une quelconque des revendications précédentes, **caractérisé en ce que** la plaque de retenue (12) est fixée à un élément de support (13), en particulier une tôle de support, par une liaison par engagement par correspondance de formes et/ou par force et/ou amovible, en particulier par une liaison enfichable (13b, 12b) ou par une liaison vissée (13d, 12d, 14), l'élément de support (13) étant directement retenu entre un boulon d'ancrage (5), portant un oeillet de fixation (4), d'un logement de pièce fonctionnelle (3), en particulier un logement de tourillon, et la structure de carrosserie (1, 7).

9. Revêtement selon la revendication 8, **caractérisé en ce que** l'élément de support (13) présente plusieurs rainures de guidage (13b), notamment deux rainures de guidage s'étendant verticalement et parallèlement les unes aux autres, dans lesquelles des taurillons correspondantes (12b) de la plaque de retenue (12), vus dans la direction de l'axe vertical de haut en bas, peuvent être enfoncés jusqu'à une butée orientée horizontalement (12c).

10. Revêtement selon l'une quelconque des revendications précédentes, **caractérisé en ce que** dans une paroi arrière (10c) du revêtement (10) sont formées des cavités (10ca) s'étendant verticalement et parallèlement les unes aux autres, par le biais desquelles le revêtement (10) pleut être enfiché sur des nervures (12a) faisant saillie vers le haut dans la direction de l'axe vertical et façonnées sur la plaque de retenue (12).
